# EUROPEAN PATENT APPLICATION

(11) **EP 4 817 982 A1**
(43) Date of publication of application: **07.10.2026**
(21) Application number: 25896358.6
(22) Date of filing: 24.09.2025
(51) Int. Cl.: B60W 30/18, B60W 30/095, G05D 1/43, B60W 30/16, B60W 60/00, B60W 40/02

(54) **VEHICLE LANE-CHANGING CONTROL METHOD AND APPARATUS, AND ELECTRONIC DEVICE, STORAGE MEDIUM AND VEHICLE**

(30) Priority: 14.01.2025 CN 202510057865
(71) Applicant: Chongqing Changan Technology Co., Ltd., Chongqing 401133 (CN)
(72) Inventor: LAN, Xiaolong, Chongqing 401133 (CN); YANG, Yichuan, Chongqing 401133 (CN); LI, Wanhong, Chongqing 401133 (CN); KONG, Zhouwei, Chongqing 401133 (CN); HE, Yong, Chongqing 401133 (CN)
(74) Representative: Elzaburu S.L.P.
(86) International application number: PCT/CN2025/123740
(87) International publication number: WO 2026/152768

(57) **Abstract**

The present application discloses a vehicle lane change control method, an apparatus, an electronic device, a storage medium and a vehicle, relating to the technical field of vehicle autonomous driving. By acquiring a first driving parameter, a second driving parameter and road information of a vehicle, the second driving parameter including a plurality of driving parameters of each of a plurality of surrounding vehicles; determining a planned lane change trajectory of the vehicle, an expected acceleration duration of ego vehicle and an expected acceleration of ego vehicle based on the first driving parameter, the second driving parameter and the road information; optimizing the planned lane change trajectory and the expected acceleration of ego vehicle by a nonlinear programming method to obtain a target lane change trajectory and a target acceleration, the target lane change trajectory-time function and a target acceleration-time function being smooth curves; and controlling the vehicle to start accelerating so that the vehicle travels from an original lane to a target lane according to the target lane change trajectory, due to the lane change trajectory-time function and the acceleration-time function being both smooth curves, the acceleration of the vehicle is made smoother, improving passenger comfort.

## Description

The present application claims the priority of the Chinese patent application with the application number 202510057865.X, filed with the China National Intellectual Property Administration on January 14, 2025, and titled "VEHICLE LANE CHANGE CONTROL METHOD, APPARATUS, ELECTRONIC DEVICE, STORAGE MEDIUM, AND VEHICLE", the entire content of which is incorporated herein by reference.

### TECHNICAL FIELD

The present application relates to the technical field of vehicle autonomous driving, and specifically to a vehicle lane change control method, an apparatus, an electronic device, a storage medium, and a vehicle.

### BACKGROUND

Currently, for point-to-point autonomous driving tasks on high-speed structured roads, complete point-to-point autonomous driving can already be achieved. However, in addition to requiring the vehicle to have self-adaptive following cruise capability, higher requirements are set on merging, converging, obstacle avoidance, etc., in order to complete the entire stage of driving. Typical merging and converging scenarios include: a vehicle entering a side road from a main road, or entering a main road from a side road; on a highway, a vehicle entering the highway from a ramp, or a vehicle driving on a high-grade road with upper and lower multi-lanes, etc. In scenarios such as merging, converging, and obstacle avoidance, changing lanes is key to evaluating the level of autonomous driving.

In existing lane change solutions, due to the use of a large acceleration during overtaking and the constant nature of the acceleration, a very obvious acceleration oscillation occurs in the vehicle, which in turn leads to poor passenger comfort.

Therefore, existing lane change methods still need improvement in terms of driving comfort.

### SUMMARY

One objective of the present application is to provide a vehicle lane change control method, to solve the problem of acceleration oscillation during lane change, which leads to poor user driving experience; a second objective is to provide a vehicle lane change control apparatus; a third objective is to provide an electronic device; a fourth objective is to provide a readable storage medium; a fifth objective is to provide a vehicle.

To achieve the above objectives, the technical solutions adopted by the present application are as follows.

A vehicle lane change control method, the method including:
acquiring a first driving parameter, a second driving parameter and road information of a vehicle, the second driving parameter including a plurality of driving parameters for each of a plurality of surrounding vehicles;
determining a planned lane change trajectory of the vehicle, an expected acceleration duration of ego vehicle and an expected acceleration of ego vehicle based on the first driving parameter, the second driving parameter and the road information; optimizing the planned lane change trajectory and the expected acceleration of ego vehicle by a nonlinear programming method to obtain a target lane change trajectory and a target acceleration, where the target lane change trajectory and a target acceleration-time function are smooth curves;
controlling the vehicle to start accelerating within the expected acceleration duration of ego vehicle according to the target acceleration, so that the vehicle travels from an original lane to a target lane according to the target lane change trajectory.

According to the above technical means, by acquiring the first driving parameter, the second driving parameter, and the road information of the vehicle; then determining the planned lane change trajectory of the vehicle, the predicted acceleration duration of ego vehicle, and the predicted acceleration of ego vehicle based on the first driving parameter, the second driving parameter, and the road information; then optimizing the planned lane change trajectory and the predicted acceleration of ego vehicle by the nonlinear programming method to obtain the target lane change trajectory and the target acceleration; and finally controlling the vehicle to start accelerating according to the target acceleration within the predicted acceleration duration of ego vehicle, so that the vehicle travels from the original lane to the target lane according to the target lane change trajectory, on the one hand, a high probability of successful lane change can be achieved to ensure driving safety, and on the other hand, the lane change trajectory and acceleration can be appropriately adjusted. Since the lane change trajectory and the acceleration-time function are both smooth curves, that is, the target lane change trajectory and the target acceleration have a gentler slope, smooth transition, no sharp points, and no abrupt change points, the acceleration of the vehicle can be made smoother, avoiding sudden acceleration or sudden deceleration of the vehicle, thereby improving passenger comfort.

Further, the determining a lane change trajectory of the vehicle, an expected acceleration duration of ego vehicle and an expected acceleration of ego vehicle based on the first driving parameter, the second driving parameter and the road information includes:
inputting the first driving parameter and the second driving parameter into a trajectory prediction model to obtain a motion state of ego vehicle and motion states of a plurality of surrounding vehicles within a future first time period, where the motion states of the plurality of surrounding vehicles comprise a motion state of each of the plurality of surrounding vehicles;
determining the planned lane change trajectory based on the motion state of ego vehicle, the motion states of the plurality of surrounding vehicles and the road information;
determining the expected acceleration duration of ego vehicle based on the planned lane change trajectory, the first driving parameter and the second driving parameter;
determining the expected acceleration of ego vehicle based on the planned lane change trajectory, the first driving parameter and the expected acceleration duration of ego vehicle.

Further, the determining the lane change trajectory based on the motion state of ego vehicle, the motion states of the plurality of surrounding vehicles and the road information includes:
determining a plurality of lane change spaces in an adjacent lane of the original lane based on the road information, where the lane change spaces are gaps available for lane changing in the adjacent lane;
determining a target lane change space from the plurality of lane change spaces based on the motion state of ego vehicle and the motion states of the plurality of surrounding vehicles;
determining the planned lane change trajectory based on the motion state of ego vehicle and the target lane change space.

Further, the second driving parameter includes a driving parameter of directly-ahead vehicle, a driving parameter of front-side vehicle, and a driving parameter of rear-side vehicle, and the determining the expected acceleration duration of ego vehicle based on the planned lane change trajectory, the first driving parameter and the second driving parameter includes:
determining a limit lane change duration based on the planned lane change trajectory, the first driving parameter and the driving parameter of directly-ahead vehicle, where the limit lane change duration is a maximum time period for which the vehicle is capable of being accelerated;
inputting the motion state of ego vehicle and the driving parameter of front-side vehicle into a lane change game model to obtain a first lane change duration;
inputting the motion state of ego vehicle and the driving parameter of rear-side vehicle into a lane change game model to obtain a second lane change duration;
in a case where the first lane change duration is less than or equal to the limit lane change duration and the second lane change duration is less than or equal to the limit lane change duration, taking a larger lane change duration of the first lane change duration and the second lane change duration as the expected acceleration duration of ego vehicle.

Further, the optimizing the planned lane change trajectory and the expected acceleration of ego vehicle by a nonlinear programming method to obtain a target lane change trajectory and a target acceleration includes:
projecting driving trajectories of the plurality of surrounding vehicles onto a displacement-time diagram to obtain a position constraint, where the driving trajectories of the plurality of surrounding vehicles include a driving trajectory of each of the plurality of surrounding vehicles, and the driving trajectories of the plurality of surrounding vehicles are obtained by inputting the second driving parameter into a trajectory prediction model;
determining a speed constraint condition based on a preset vehicle speed range;
optimizing the planned lane change trajectory using a target cost function, the position constraint and the speed constraint condition to obtain the target lane change trajectory and the target acceleration.

Further, the projecting driving trajectories of the plurality of surrounding vehicles onto a displacement-time diagram to obtain a position constraint includes:
projecting a driving trajectory of directly-ahead vehicle within a first time period and a driving trajectory of front-side vehicle within the expected acceleration duration of ego vehicle onto the displacement-time diagram to obtain an upper boundary of the position constraint;
projecting a driving trajectory of rear-side vehicle within the expected acceleration duration of ego vehicle onto the displacement-time diagram to obtain a lower boundary of the position constraint.

Further, the method further includes:
in a case where the vehicle starts accelerating, acquiring a lane change start duration, a current first driving parameter and a current second driving parameter of the vehicle;
inputting the current first driving parameter and the current second driving parameter into a trajectory prediction model to obtain a first distance between the vehicle and a directly-ahead vehicle and a second distance between the vehicle and a directly-behind target vehicle within a future second time period, where the future second time period is a difference between the expected acceleration duration of ego vehicle and the lane change start duration;
in a case where the vehicle satisfies a lane change retreat condition, controlling the vehicle to abandon lane changing and return to travel in the original lane, where the lane change retreat condition include: the first distance being less than a first safety distance, or the second distance being less than a second safety distance.

Further, the method further includes:
in a case where a third distance between the vehicle and a rear-side target vehicle in the original lane is less than a third safety distance, or there exists a lane-changing vehicle that intends to change to the original lane, controlling the vehicle to travel in the target lane and outputting prompt information, where the prompt information is configured to prompt a driver that a collision risk exists.

A vehicle lane change apparatus includes:
an acquisition module, configured to acquire a first driving parameter, a second driving parameter and road information of a vehicle, where the second driving parameter includes a plurality of driving parameters of each of a plurality of surrounding vehicles;
a determination module, configured to determine a planned lane change trajectory of the vehicle, an expected acceleration duration of ego vehicle and an expected acceleration of ego vehicle based on the first driving parameter, the second driving parameter and the road information;
a calculation module, configured to optimize the planned lane change trajectory and the expected acceleration of ego vehicle by a nonlinear programming method to obtain a target lane change trajectory and a target acceleration, where the target lane change trajectory-time function and a target acceleration-time function are smooth curves;
a control module, configured to control the vehicle to start accelerating within the expected acceleration duration of ego vehicle according to the target acceleration, so that the vehicle travels from an original lane to a target lane according to the target lane change trajectory.

An electronic device includes a processor, a memory, and a program or instructions stored in the memory and executable on the processor, the program or instructions, when executed by the processor, implementing the steps of the vehicle lane change control method as described above.

A readable storage medium has a program or instructions stored thereon, the program or instructions, when executed by a processor, implementing the steps of the vehicle lane change control method as described above.

A vehicle includes the vehicle lane change control apparatus as described above.

Beneficial effects of the present application are as follows.

In the embodiments of the present application, by acquiring the first driving parameter, the second driving parameter, and the road information of the vehicle, the second driving parameter including a plurality of driving parameters for each of a plurality of surrounding vehicles, then determining the planned lane change trajectory of the vehicle, the expected acceleration duration of ego vehicle, and the expected acceleration of ego vehicle based on the first driving parameter, the second driving parameter, and the road information, then optimizing the planned lane change trajectory and the expected acceleration of ego vehicle by the nonlinear programming method to obtain the target lane change trajectory and the target acceleration, and finally controlling the vehicle to start accelerating according to the target acceleration within the expected acceleration duration of ego vehicle, such that the vehicle travels from the original lane to the target lane according to the target lane change trajectory, on the one hand, a high probability of successful lane change can be achieved to ensure driving safety, and on the other hand, the lane change trajectory and acceleration can be appropriately adjusted. Since the lane change trajectory-time function and the acceleration-time function are both smooth curves, that is, the target lane change trajectory and the target acceleration have a gentler slope, smooth transition, no sharp points, and no abrupt change points, the acceleration of the vehicle can be made smoother, avoiding sudden acceleration or sudden deceleration of the vehicle, thereby improving passenger comfort.

### BRIEF DESCRIPTION OF DRAWINGS

FIG. 1 is a step flow chart of a vehicle lane change control method provided by an embodiment of the present application.
FIG. 2 is a specific step flow chart of a vehicle lane change control provided by an embodiment of the present application.
FIG. 3A is a schematic diagram of a lane change space provided by an embodiment of the present application.
FIG. 3B is a schematic diagram of another lane change space provided by an embodiment of the present application.
FIG. 4 is a specific step flow chart of a vehicle lane change control provided by an embodiment of the present application.
FIG. 5A is a schematic diagram of a lane change trajectory of a vehicle provided by an embodiment of the present application.
FIG. 5B is a schematic diagram of an acceleration of a vehicle provided by an embodiment of the present application.
FIG. 6 is a block diagram of a vehicle lane change control apparatus provided by an embodiment of the present application.
FIG. 7 is a schematic diagram of a hardware structure of an electronic device provided by an embodiment of the present application.

### DESCRIPTION OF EMBODIMENTS

The embodiments of the present application will be described below with reference to the accompanying drawings and preferred embodiments, and those skilled in the art can easily understand other advantages and effects of the present application from the content disclosed in this specification. The present application can also be implemented or applied through other different specific embodiments, and various modifications or changes can be made to the details in this specification based on different viewpoints and applications without departing from the spirit of the present application. It should be understood that the preferred embodiments are only for illustrating the present application, and are not intended to limit the protection scope of the present application.

It should be noted that the drawings provided in the following embodiments are only used to schematically illustrate the basic concept of the present application, so the drawings only show components related to the present application rather than being drawn according to the number, shape, and size of components in actual implementation. The form, quantity, and proportion of each component in actual implementation can be changed arbitrarily, and the layout form of components may also be more complex.

During the process of a driver driving a vehicle, for some reason, such as pursuing higher driving efficiency, constraints of road traffic markings, etc., an intention to change lanes (hereinafter referred to as "lane change") may arise. Since lane change behavior involves the interaction of vehicles on multiple lanes, if the lane change cannot be planned reasonably, it may instead affect the traffic efficiency of the road, and in severe cases, even cause traffic accidents. Generally, the lane change process can be divided into an intention generation phase, an execution phase, and an adjustment phase. The role of the intention generation phase is to create the lane change. In the intention generation phase, a target lane is selected, and a safe lane change space is sought. If no suitable lane change space is found, the lane change behavior is abandoned. The role of the execution phase is to start accelerating to complete the lane change. In the execution phase, real-time trajectory planning needs to be performed based on the motion states of a plurality of surrounding vehicles, and the planned trajectory is optimized. The role of the adjustment phase is to determine whether to fall back to the original lane. In the adjustment phase, the vehicle should adjust its speed dynamically to follow a preceding vehicle in the target lane.

In summary, in the intention generation and execution phases, reasonable judgments need to be made on the motion states of a plurality of surrounding vehicles to ensure the safety requirements of the lane change behavior. In the prior art, due to the use of a large acceleration during overtaking and the constant nature of the acceleration, very obvious acceleration oscillation occurs in the vehicle, which in turn leads to poor passenger comfort. At the same time, the prior art does not consider the scenario of falling back to the original lane after starting the lane change, nor does it consider the scenario where falling back to the original lane is prohibited when vehicles in other lanes simultaneously change lanes to the target lane, which may cause traffic accidents.

The vehicle lane change control method provided by the embodiments of the present application will be described in detail below through specific embodiments and their application scenarios with reference to the accompanying drawings.

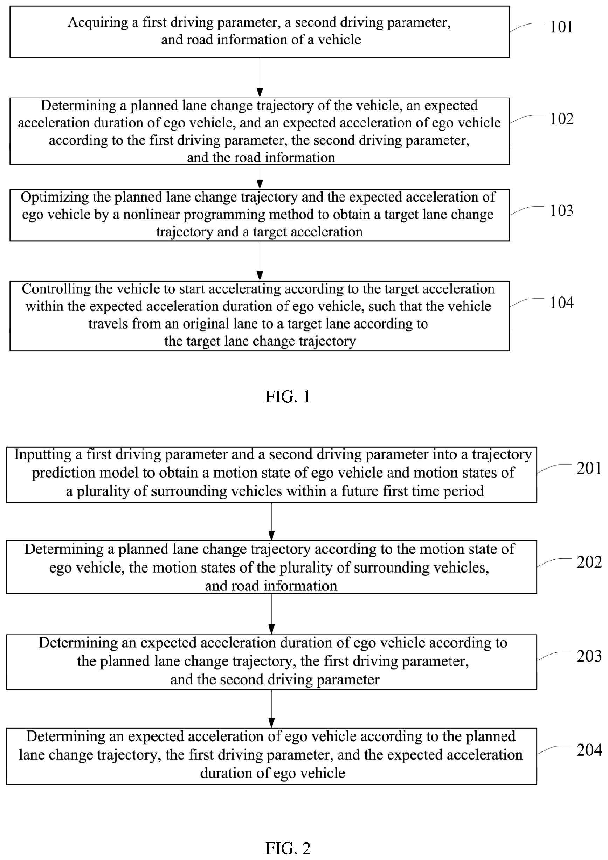

FIG. 1 is a step flow chart of a vehicle lane change control method provided by an embodiment of the present application. As shown in FIG. 1, the method may include the following steps.

Step 101, acquiring a first driving parameter, a second driving parameter, and road information of a vehicle.

In an embodiment of the present application, the second driving parameter includes a plurality of driving parameters for each of a plurality of surrounding vehicles.

Optionally, the plurality of surrounding vehicles may include: a directly-ahead vehicle, a directly-behind vehicle, a front-side vehicle, and a rear-side vehicle. The driving parameters may include: position, speed, acceleration, etc., where the acceleration may include lateral acceleration and/or longitudinal acceleration, and the acceleration has magnitude and direction. The second driving parameter may include: a driving parameter of the directly-ahead vehicle, a driving parameter of the directly-behind vehicle, a driving parameter of the front-side vehicle, and a driving parameter of the rear-side vehicle. That is, the second driving parameter may include: the position, speed, acceleration, etc. of the directly-ahead vehicle; the position, speed, acceleration, etc. of the directly-behind vehicle; the position, speed, acceleration, etc. of the front-side vehicle; and the position, speed, acceleration, etc. of the rear-side vehicle.

It can be understood that the embodiments of the present application can collect the second driving parameter in real time through on-board sensors, where the second driving parameter is dynamic and can reflect the speed change rate of a plurality of surrounding vehicles and the distance from the ego vehicle, facilitating subsequent prediction of the future motion states of the plurality of surrounding vehicles and the change in distance from the ego vehicle.

In some embodiments, before step 101, the vehicle lane change control method may further include: in a case where a trigger condition is satisfied, starting a lane change creation mode of the vehicle, where the lane change creation mode may include: turn-signal-initiated lane change, voice request lane change, automatic overtaking lane change, ramp entry and exit lane change, converging lane change, obstacle avoidance lane change, etc.

Step 102, determining a planned lane change trajectory of the vehicle, an expected acceleration duration of ego vehicle, and an expected acceleration of ego vehicle based on the first driving parameter, the second driving parameter, and the road information.

In an embodiment of the present application, the road information may include lane line information, the lane line information including a current lane, a left adjacent lane, and a right adjacent lane. The lane line information may also include lane line types, for example, dashed line, solid line, dashed line turning into solid line, solid line turning into dashed line, etc. The current lane refers to a lane where the ego vehicle is located, and the current lane may also be referred to as an "original lane". A target lane refers to a lane that the ego vehicle intends to reach after the lane change, and the target lane may be the left adjacent lane or the right adjacent lane relative to the current lane.

In some embodiments, the road information may further include obstacle information, the obstacle information including the position and size of an obstacle.

Exemplarily, in step 102, the road information may be identified based on the current position of the ego vehicle through an on-board visual sensor. In step 102, the road information may also be obtained by sending a road information acquisition request to a cloud server and using road information request processing information returned by the cloud server.

In some embodiments, the expected acceleration duration of ego vehicle and the expected acceleration of ego vehicle may be comfort calibration parameters obtained after multiple lane change tests, and different lane change creation modes correspond to different coefficients. For example, in special scenarios such as converging, obstacle avoidance, and ramp exit, the lane change creation completion duration is limited to 4 seconds (s), the minimum deceleration coefficient is calibrated to -3, and the maximum acceleration coefficient is calibrated to +0.8.

Step 103, optimizing the planned lane change trajectory and the expected acceleration of ego vehicle by a nonlinear programming method to obtain a target lane change trajectory and a target acceleration.

Where, the target lane change trajectory and a target acceleration-time function are smooth curves.

In some embodiments, a time-dependent polynomial equation may be used to establish a lane change trajectory optimization model, thereby ensuring that the lane change trajectory and its derivative functions (speed, acceleration) are continuous and smooth.

It can be understood that nonlinear programming is a method for solving optimization problems where one or several nonlinear functions exist in the objective function or constraint conditions. Quadratic programming is a special class of mathematical programming problems in the nonlinear programming, where its objective function is a quadratic function and the constraint conditions are linear constraints, making it easier to solve.

For example, when solving for the target lane change trajectory and the target acceleration, an objective function is determined based on a preset optimization objective. Then, based on the first driving parameter and the target driving parameter, a plurality of constraint conditions that need to be followed when solving for each parameter in the cost function are determined. The constraint conditions may be linear constraints or nonlinear constraints, thus obtaining a lane change trajectory optimization model based on quadratic programming. The planned lane change trajectory and the expected acceleration of ego vehicle are input into the lane change trajectory optimization model to obtain output target lane change trajectory and target acceleration. Due to the characteristics of quadratic programming, the target lane change trajectory and the target acceleration-time function are smooth curves, having a gentler slope, and the curves of the target lane change trajectory and the target acceleration have smooth transitions, no sharp points, and no abrupt change points. Thus, the acceleration of the vehicle can be made smoother, avoiding sudden acceleration or sudden deceleration of the vehicle, thereby improving passenger comfort.

In some embodiments, step 103 may include: substituting constraint conditions into a quadratic programming (Quadratic Programming, QP) solver, optimizing an objective function, and obtaining an optimization result, thereby effectively improving the smoothness of the vehicle during lane change.

Step 104, controlling the vehicle to start accelerating according to the target acceleration within the expected acceleration duration of ego vehicle, such that the vehicle travels from an original lane to a target lane according to the target lane change trajectory.

In some embodiments, before step 104, the above vehicle lane change control method further includes: in a case where the vehicle has not started accelerating, determining whether the vehicle satisfies a lane change suppression condition based on a current first driving parameter and a current second driving parameter; in a case where the vehicle satisfies the lane change suppression condition, controlling the vehicle to abandon the lane change; in a case where the vehicle does not satisfy the lane change suppression condition, controlling the vehicle to start accelerating, such that the vehicle travels from the original lane to the target lane according to the target lane change trajectory. The lane change suppression condition may include: a distance between the ego vehicle and a front-side vehicle or a rear-side vehicle is less than a minimum safety distance, or a speed difference between the ego vehicle and the front-side vehicle or the rear-side vehicle is less than a minimum safety speed. Optionally, the minimum safety distance and the minimum safety speed are determined based on the speed of the ego vehicle and a relative distance between the ego vehicle and the directly-ahead vehicle.

In summary, in the embodiments of the present application, by acquiring the first driving parameter, the second driving parameter, and the road information of the vehicle, the second driving parameter including a plurality of driving parameters for each of a plurality of surrounding vehicles; then determining the planned lane change trajectory of the vehicle, the expected acceleration duration of ego vehicle, and the expected acceleration of ego vehicle based on the first driving parameter, the second driving parameter, and the road information; then optimizing the planned lane change trajectory and the expected acceleration of ego vehicle by the nonlinear programming method to obtain the target lane change trajectory and the target acceleration; and finally controlling the vehicle to start accelerating according to the target acceleration within the expected acceleration duration of ego vehicle, such that the vehicle travels from the original lane to the target lane according to the target lane change trajectory, on the one hand, a high probability of successful lane change can be achieved to ensure driving safety, and on the other hand, the lane change trajectory and acceleration can be appropriately adjusted. Since the lane change trajectory and the acceleration-time function are both smooth curves, that is, the target lane change trajectory and the target acceleration have a gentler slope, smooth transition, no sharp points, and no abrupt change points, the acceleration of the vehicle can be made smoother, avoiding sudden acceleration or sudden deceleration of the vehicle, thereby improving passenger comfort.

In some embodiments, referring to FIG. 2, step 102 may include the following steps.

Step 201, inputting the first driving parameter and the second driving parameter into a trajectory prediction model to obtain a motion state of ego vehicle and motion states of a plurality of surrounding vehicles within a future first time period.

In an embodiment of the present application, the motion states of the plurality of surrounding vehicles include a motion state for each of the plurality of surrounding vehicles.

Optionally, the motion state may include acceleration and a driving trajectory.

In an embodiment of the present application, the trajectory prediction model may be a neural network model, and the trajectory prediction model is trained using real traffic data to obtain a trained trajectory prediction model.

Exemplarily, the trajectory prediction model may be a mathematical model or algorithm, which can be used to describe and predict the behavior of a vehicle following a preceding vehicle on the road, such as a safety distance model, etc. The neural network model may be a machine learning model based on an artificial neural network, capable of handling complex traffic situations, such as a long short-term memory (Long Short-Term Memory, LSTM) recurrent neural network, etc. The real traffic data may be data collected in an actual road traffic environment, such as information on vehicle speed, acceleration, position, time, etc.

It can be understood that the embodiments of the present application can establish a vehicle trajectory prediction model through a neural network combined with a large amount of real traffic data, which can predict the dynamic behavior of vehicles on the road, where, the first driving parameter and the second driving parameter are input into the trajectory prediction model to predict the acceleration of a plurality of surrounding vehicles, providing drivers with more accurate and timely driving assistance information, thereby obtaining the motion state of ego vehicle and the motion states of the plurality of surrounding vehicles within the future first time period.

Exemplarily, an LSTM neural network is used to establish a trajectory prediction model for the vehicle. Input features are the speed of the ego vehicle of 30 meters per second (m/s), the relative speed between the ego vehicle and the directly-ahead vehicle of 10 m/s, and the relative acceleration between the ego vehicle and the directly-ahead vehicle of 5 m/s². An output is the acceleration of the ego vehicle and the acceleration of the directly-ahead vehicle within the future 8 s. Optionally, the trajectory prediction model may also output the distance between the ego vehicle and the directly-ahead vehicle within the future 8 s, the driving trajectory of the ego vehicle, the driving trajectory of the directly-ahead vehicle, or other driving parameters, which is not limited in the embodiments of the present application.

Step 202, determining a planned lane change trajectory according to the motion state of ego vehicle, the motion states of the plurality of surrounding vehicles, and the road information.

In some embodiments, step 1022 may include the following steps:
determining a plurality of lane change spaces in an adjacent lane of the original lane based on the road information, the lane change spaces being gaps available for lane changing in the adjacent lane;
determining a target lane change space from the plurality of lane change spaces based on the motion state of ego vehicle and the motion states of the plurality of surrounding vehicles;
determining the planned lane change trajectory based on the motion state of ego vehicle and the target lane change space.

In an embodiment of the present application, the lane change trajectory may be a driving trajectory calculated based on the target lane change space, the motion state of ego vehicle, and the motion states of the plurality of surrounding vehicles, enabling a safe transition from the current lane to the target lane.

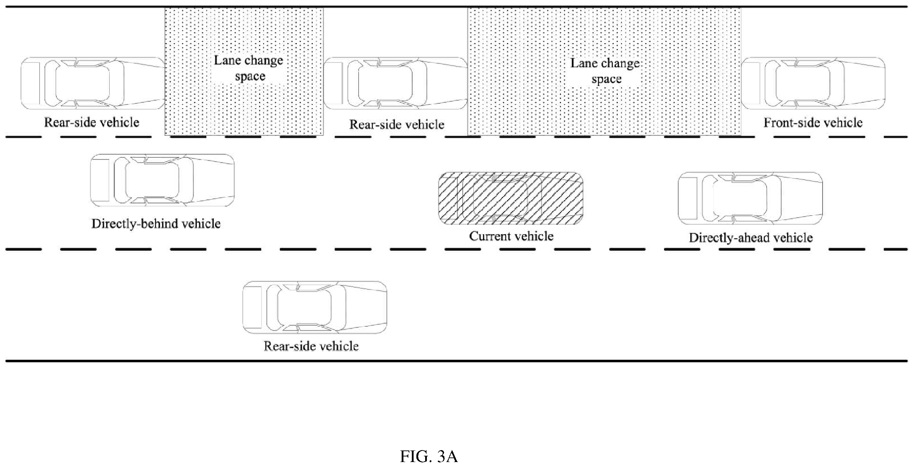

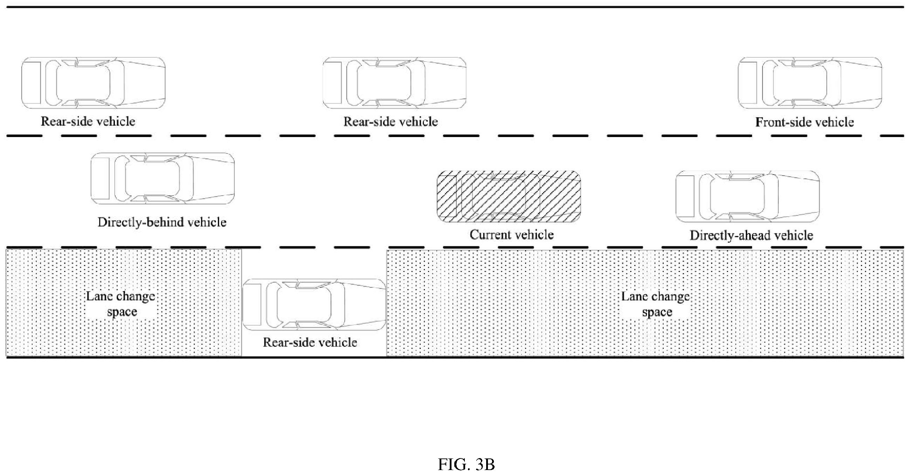

Exemplarily, referring to FIG. 3A and FIG. 3B, the lane change space in the embodiments of the present application may be diverse. In a case where the current vehicle needs to change a lane to an adjacent lane, when a target lane is the left lane, a plurality of lane change spaces are shown in FIG. 3A; when a target lane is the right lane, a plurality of lane change spaces are shown in FIG. 3B.

In a possible implementation, determining the target lane change space from the plurality of lane change spaces based on the motion state of ego vehicle and the motion states of the plurality of surrounding vehicles may include: establishing a cost calculation function, the cost calculation function being used to predict a real-time state of the ego vehicle within a preset lane change creation time period at a preset acceleration or a preset deceleration; generating a constraint condition based on the motion states of the plurality of surrounding vehicles; scoring the plurality of lane change spaces based on the cost calculation function and the constraint condition; determining a lane change space with the highest score among the plurality of lane change spaces as the target lane change space.

Exemplarily, a specific way of establishing the cost calculation function is as follows: obtaining a preset acceleration unit and a cost calculation function formula; initializing the cost calculation function formula corresponding to each acceleration unit; setting a preset lane change creation time period according to the trajectory prediction model to obtain a speed and position state of the directly-ahead vehicle; using a preset evaluation function to determine whether the ego vehicle and the directly-ahead vehicle satisfy a safety distance at every moment within the lane change creation time period to support the lane change, and obtaining a first score value for the plurality of lane change spaces; similarly, using the evaluation function to calculate a second score value for the front-side vehicle and a third score value for the rear-side vehicle; and taking a lane change space with the highest score as the target lane change space.

In a possible implementation, before determining the planned lane change trajectory based on the motion state of ego vehicle and the target lane change space, the above vehicle lane change control method may further include: judging whether a lane change flag of the vehicle satisfies an activation condition; in a case where the lane change flag satisfies the activation condition, determining the planned lane change trajectory based on the motion state of ego vehicle and the target lane change space, and recording an acceleratable time; in a case where the lane change flag does not satisfy the activation condition, abandoning the lane change. Optionally, the activation condition of the lane change flag includes: within a preset duration, the second score value is continuously greater than or equal to a preset second scoring threshold, and the third score value is continuously greater than or equal to a preset third scoring threshold.

In another possible implementation, determining the target lane change space from the plurality of lane change spaces based on the motion state of ego vehicle and the motion states of the plurality of surrounding vehicles may further include: calculating an optimal lane change speed for each lane change space, the optimal lane change speed being a speed with a minimum lane change cost; determining an evaluation score for each lane change space based on the optimal lane change speed and the acceleratable time, and a preset weight formula; and taking the lane change space with the highest score as the target lane change space.

In a possible implementation, determining the planned lane change trajectory based on the motion state of ego vehicle and the target lane change space may include: sending a lane change request to a cloud server, the lane change request including the motion state of ego vehicle and the target lane change space; and receiving the planned lane change trajectory returned by the cloud server. Optionally, the cloud server may be a server corresponding to a navigation application software or a map application software.

In another possible implementation, the above vehicle lane change control method may further include: in a case where the number of determined lane change space is one, taking this lane change space as the target lane change space.

In some embodiments, the vehicle lane change control method may further include: in a case where no lane change space can be determined in the adjacent lane, exiting the lane change mode. For example, in a congested scenario, before starting acceleration, it may be judged whether to exit the lane change creation mode based on whether the lane change space satisfies a minimum safety distance, avoiding overall following unevenness caused by acceleration switching between creation and straight driving.

Through the above technical means, the optimal target lane change space is determined based on the predicted motion state of ego vehicle and the predicted motion states of the plurality of surrounding vehicles, accurately determining whether there is a collision risk during the lane change process, and improving driving safety; and the lane change trajectory of the current vehicle is planned based on the target lane change space, avoiding unnecessary waiting and tentative lane changes, significantly improving lane change efficiency and road capacity, ensuring a smooth lane change process and enhancing passenger comfort.

Step 203, determining an expected acceleration duration of ego vehicle according to the planned lane change trajectory, the first driving parameter, and the second driving parameter.

In some embodiments, the second driving parameter includes a driving parameter of a directly-ahead vehicle, a driving parameter of a front-side vehicle, and a driving parameter of a rear-side vehicle, and step 203 may include the following steps:
determining a limit lane change duration based on the planned lane change trajectory, the first driving parameter, and the driving parameter of the directly-ahead vehicle, the limit lane change duration being a maximum time period during which the vehicle can be accelerated;
inputting the motion state of ego vehicle and the driving parameter of the front-side vehicle into a lane change game model to obtain a first lane change duration;
inputting the motion state of ego vehicle and the driving parameter of the rear-side vehicle into the lane change game model to obtain a second lane change duration;
in a case where the first lane change duration is less than or equal to the limit lane change duration and the second lane change duration is less than or equal to the limit lane change duration, taking a larger lane change duration of the first lane change duration and the second lane change duration as the expected acceleration duration of ego vehicle.

In a possible implementation, determining the limit lane change duration based on the planned lane change trajectory, the first driving parameter, and the driving parameter of the directly-ahead vehicle may include: obtaining a preset acceleration creation time; within the acceleration creation time, performing a finite number of cycles under a constraint of confirming suitability for lane change, gradually increasing the acceleration creation time until the limit lane change duration is found.

In an embodiment of the present application, the lane change game model may be a neural network model, and the lane change game model is trained using real traffic data to obtain a trained lane change game model.

Exemplarily, the lane change game model may be a mathematical model or algorithm, which can be used to describe and predict the behavior of whether a vehicle's lane change on the road being able to satisfy a safety distance, such as a Bayesian Stackelberg Game (Bayesian Stackelberg Game) model, etc. An optimal solution obtained from a payoff function of the Bayesian Stackelberg Game model is the obtained first lane change duration or the obtained second lane change duration.

It can be understood that the limit lane change duration is a duration during which the distance between the ego vehicle and the directly-ahead vehicle satisfies a safety distance, the first lane change duration is a duration during which the distance between the ego vehicle and the front-side vehicle satisfies a safety distance, and the second lane change duration is a duration during which the distance between the ego vehicle and the rear-side vehicle satisfies a safety distance. When the first lane change duration is less than or equal to the limit lane change duration and the second lane change duration is less than or equal to the limit lane change duration, it indicates that the distances between the ego vehicle and each of the directly-ahead vehicle, the front-side vehicle, and the rear-side vehicle all satisfy the safety distance, and there is no risk of collision. To ensure the safety of the vehicle lane change, the larger lane change duration of the first lane change duration and the second lane change duration is taken as the expected acceleration duration of ego vehicle.

In some embodiments, the vehicle lane change control model may further include: in a case where the first lane change duration is greater than the limit lane change duration, or the second lane change duration is greater than the limit lane change duration, abandoning the lane change.

Through the above technical means, game theory is introduced into the autonomous vehicle lane change trajectory planning method. The autonomous vehicle can determine whether to continue the lane change based on its own motion state and the motion states of a plurality of surrounding vehicles, effectively considering the influence of multiple targets during the lane change process, reducing the possibility of vehicle collision, and improving lane change safety.

Step 204, determining an expected acceleration of ego vehicle according to the planned lane change trajectory, the first driving parameter, and the expected acceleration duration of ego vehicle.

In some embodiments, step 204 may include: sending a lane change request to a cloud server, the lane change request including the planned lane change trajectory, the first driving parameter, and the expected acceleration duration of ego vehicle; receiving the expected acceleration of ego vehicle returned by the cloud server. Optionally, the cloud server may be a server corresponding to a navigation application software or a map application software.

In summary, the embodiments of the present application predict the motion state of ego vehicle and the motion states of a plurality of surrounding vehicles according to the trajectory prediction model, then determine the planned lane change trajectory in combination with the road information, and finally determine the expected acceleration duration of ego vehicle and the expected acceleration duration of ego vehicle based on the obtained planned lane change trajectory and determine the expected acceleration of ego vehicle, which can improve the consistency of autonomous driving decision-making and the smoothness of control.

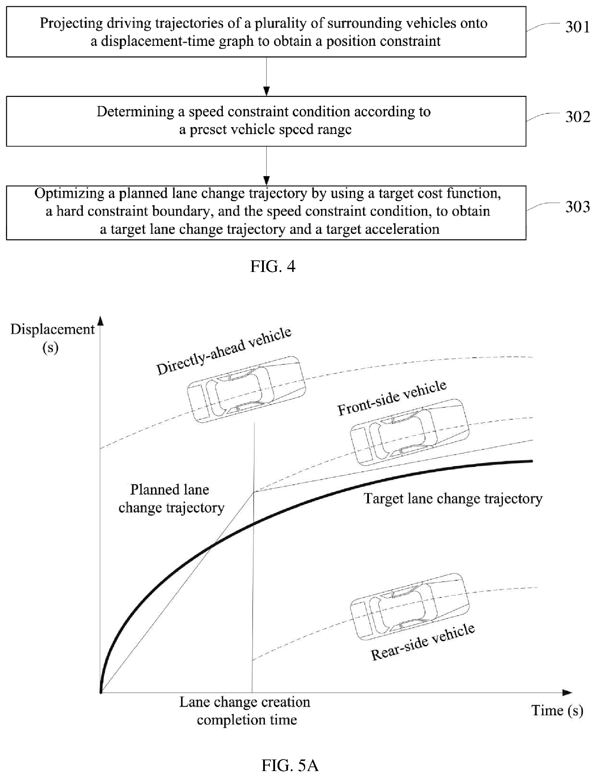

In some embodiments, referring to FIG. 4, step 103 may include the following steps.

Step 301, projecting the driving trajectories of a plurality of surrounding vehicles onto a displacement-time graph to obtain a position constraint.

In an embodiment of the present application, the driving trajectories of the plurality of surrounding vehicles include a driving trajectory of each vehicle of the plurality of surrounding vehicles.

In an embodiment of the present application, the driving trajectories of the plurality of surrounding vehicles are obtained by inputting the second driving parameter into a trajectory prediction model.

In an embodiment of the present application, a manner of obtaining the driving trajectories of the plurality of surrounding vehicles is similar to that of step 201, and details are not described herein again.

In some embodiments, step 301 may include: projecting a driving trajectory of a directly-ahead vehicle within a first time period and a driving trajectory of a front-side vehicle within an expected acceleration duration of ego vehicle onto the displacement-time graph to obtain an upper boundary of the position constraint.

A driving trajectory of a rear-side vehicle within the expected acceleration duration of ego vehicle is projected onto the displacement-time graph to obtain a lower boundary of the position constraint.

Exemplarily, the first time period may be 8s.

In some embodiments, since the vehicle starts accelerating during the time period following a successful lane change creation, a difference between the first time period and the expected acceleration duration of ego vehicle is also referred to as a lane change creation completion duration, which is obtained by calibration, and different lane change creation modes correspond to different lane change creation completion durations. That is, a boundary line for projection onto the displacement-time graph may be the lane change creation completion duration.

For example, referring to FIG. 5A, the lane change creation completion duration is 4s. Within the lane change creation completion duration, only the directly-ahead vehicle is used as the upper boundary of the ego vehicle's driving trajectory. After the lane change creation completion duration, the ego vehicle needs to form final upper and lower boundary constraints with respect to three targets: the directly-ahead vehicle, the front-side vehicle, and the rear-side vehicle. First, the entire 8s trajectory of the nearest directly-ahead vehicle (the following target) is mapped into the S-T graph. Starting from the 5th second, the driving trajectory of the front-side vehicle and the driving trajectory of the rear-side vehicle are mapped into the S-T graph for processing. For the vehicle in front of the lane change space, 4s is the time estimated for the ego vehicle to start after creating time in its own lane. Thus, the number of the plurality of surrounding vehicles finally entering the S-T graph does not exceed 3, and a traversal is performed from 8s to 0s with a sampling period of 0.1s to form a monotonous upper and lower boundary, which is used as inequality position constraint for QP.

By means of the above technical means, it is considered that the vehicle lane change is divided into an intention generation phase and an actual execution phase, that is, the vehicle requires a certain time to create the lane change. Projecting the plurality of surrounding vehicles at different positions in different time periods can improve the accuracy of lane change trajectory optimization and reduce the amount of calculation for solving.

Step 302, determining a speed constraint condition according to a preset vehicle speed range.

In an embodiment of the present application, different lane change creation modes correspond to different preset vehicle speed ranges, and comfortable acceleration/deceleration upper limits and slope upper limits are calibrated under different scenarios to form corresponding inequality constraint.

In a possible implementation, the vehicle speed range may also be obtained according to the ego vehicle speed before the lane change. For example, in a converging lane change scenario, the vehicle speed range is less than or equal to 115% of a set vehicle speed, and greater than or equal to 40% of the ego vehicle speed before the lane change.

Step 303, optimizing the planned lane change trajectory by using a target cost function, the position constraint, and the speed constraint condition to obtain a target lane change trajectory and a target acceleration.

In a possible implementation manner, the target cost function is a functional expression fitted for a plane curve of a current lane and a target lane. Optionally, road plane information is collected, and curved road information is collected using a high-precision map, sensors, and a global positioning system (Global Positioning System, GPS) device, obtaining horizontal and vertical coordinates x and y of the plane sample points of a curved section, as well as a curve length s between adjacent sample points; and the functional expression of the plane curve of the current lane and the target lane is fitted using Chebyshev interpolation method.

In an embodiment of the present application, since the position, speed, and acceleration of the lane change trajectory need to be seamlessly connected, the constraint condition may also include equality constraints for a starting point and a connection point.

Exemplarily, the expression of the target cost function is as follows: $min \frac{1}{2} ∗ {x}^{T} ∗ H ∗ x + {f}^{T} ∗ x$ (1)

In formula (1), *H* represents a matrix obtained by converting the optimization objective function into a QP formula format, and *x* and *f* both represent vectors in a feasible region of the target cost function.

The constraint condition is as follows: $st LB \leq x \leq UB$ (2) ${A}_{eq} x = {b}_{eq}$ (3) ${A}_{ueq} x \leq {b}_{ueq}$ (4)\ where, formula (2) represents upper and lower boundaries of S, st represents an active set, LB represents the upper boundary of S, and UB represents the lower boundary of S; formula (3) represents the equality constraint for the starting point and the connection point, *A_{eq}x* represents the starting point, and *b_{eq}* represents the connection point; formula (4) represents the speed constraint condition, *A_{ueq}x* represents a speed range, and *b_{ueq}* represents a speed boundary.

In some embodiments, step 303 may include: solving the target cost function to obtain a planned speed, a planned acceleration, and a derivative of the planned acceleration of the vehicle at each sampling point in the trajectory to be traveled, thereby obtaining the target lane change trajectory and the target acceleration. Where, the algorithm used for solving the target cost function may include: a Lagrange method, an interior point method, an active set method, an ellipsoid algorithm, etc.

Optionally, the above vehicle lane change control method may further include: performing a secondary verification on the target acceleration solved by QP within the expected acceleration duration of ego vehicle. For example, if the lane change creation completion duration is 3s and the first time period is 7s, the expected acceleration duration of ego vehicle is 4s, and within the 4th to 7th seconds, a safety distance verification is performed between the obtained target lane change trajectory and the actual upper and lower boundaries of S.

In other embodiments, step 303 may also include: solving the target cost function that satisfies the constraint conditions, and using the optimal solution as the target lane change trajectory; and determining the target acceleration using an anchor point method based on the target lane change trajectory.

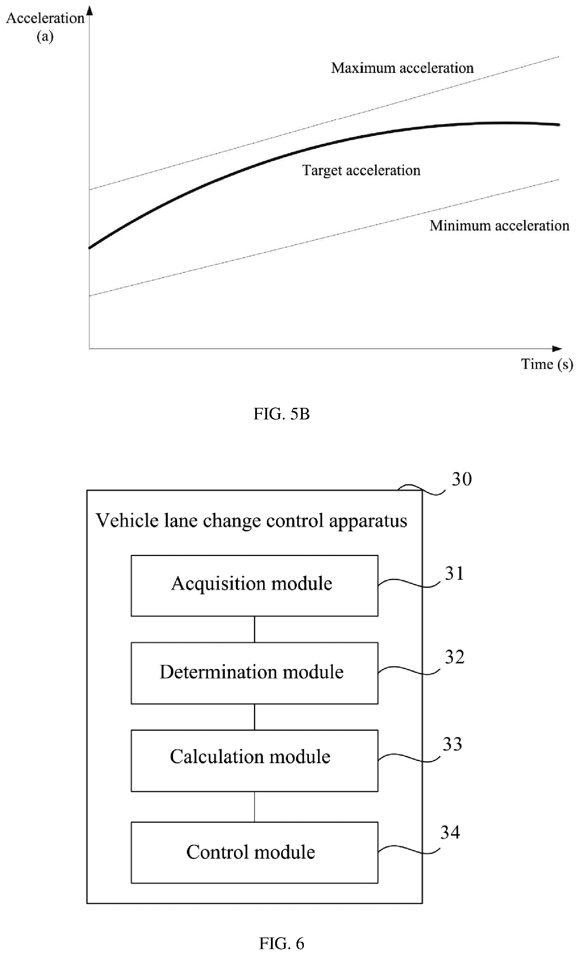

In another possible implementation, referring to FIG. 5B, the plurality of surrounding vehicles is only a rear-side vehicle, and a speed of the rear-side vehicle is greater than a preset speed threshold; step 303 may further include: constructing an expectation acceleration trajectory and an expectation deceleration trajectory of the ego vehicle within the first time period, where the expectation acceleration trajectory of the ego vehicle is generated according to a maximum acceleration, and the expectation deceleration trajectory of the ego vehicle is generated according to a minimum acceleration; and correcting an original acceleration trajectory using an acceleration correction reference trajectory. Optionally, the maximum acceleration may be obtained by looking up a table based on a speed difference between the ego vehicle and the rear-side vehicle. For example, when the rear-side vehicle is 3 m/s faster than the ego vehicle, the maximum acceleration is +130% of an acceleration calibration value, and the minimum acceleration is -50% of the acceleration calibration value. In this way, unnecessary acceleration or deceleration experiences can be generated, keeping the ego vehicle fluctuating within a small range around a constant speed reference line.

In summary, in the embodiments of the present application, since the mathematical model based on quadratic programming is relatively easy to solve, the amount of calculation during lane change planning is reduced, and while reducing the consumption of computing resources, the calculation efficiency can be improved, the real-time performance and applicability of position trajectory and acceleration control during vehicle lane change are improved, and the user's driving and riding experience is enhanced.

In some embodiments, the above vehicle lane change control method may further include the following steps:
in a case where the vehicle starts accelerating, acquiring a lane change start duration, a current first driving parameter, and a current second driving parameter of the vehicle;
inputting the current first driving parameter and the current second driving parameter into a trajectory prediction model to obtain a first distance between the vehicle and a directly-ahead vehicle and a second distance between the vehicle and a directly-behind target vehicle within a future second time period, the future second time period being a difference between the expected acceleration duration of ego vehicle and the lane change start duration;
in a case the vehicle satisfies a lane change retreat condition, controlling the vehicle to abandon lane changing and return to travel in the original lane, the lane change retreat condition including: the first distance is less than a first safety distance, or the second distance is less than a second safety distance.

Where, the first safety distance may be a minimum safety distance that needs to be maintained between the ego vehicle and the directly-ahead vehicle, and the second safety distance may be a minimum safety distance that needs to be maintained between the ego vehicle and the directly-behind vehicle.

Exemplarily, the first safety distance is 6m, and the second safety distance is 3m.

In a possible implementation, the first safety distance is determined according to a speed difference between the ego vehicle and the directly-ahead vehicle and a relative distance between the ego vehicle and the directly-ahead vehicle; and the second safety distance is determined according to a speed difference between the ego vehicle and the directly-ahead vehicle and a relative distance between the ego vehicle and the directly-behind vehicle.

Exemplarily, after the ego vehicle starts a lane change, a lateral lane change time will be arranged uniformly via a decision-making. Assuming that it takes 6s to complete the lane change and align with the lane center, timing starts when the lane change starts. At 2s after the lane change start, it is only necessary to calculate in real time that there is no longitudinal collision between the ego vehicle and the directly-behind vehicle within the next 4s, and so on. The longer the ego vehicle has started the lane change, the lower the possibility of retreat. This strategy can effectively avoid poor overall lane change experience caused by erroneous retreat.

In another possible implementation, the above vehicle lane change control method may further include: when a speed of the directly-behind vehicle is greater than the ego vehicle speed and a speed difference between the vehicle and the directly-behind vehicle is less than a preset speed difference threshold, or when the lane change creation mode is a ramp-entry lane change, reducing the first safety distance and the second safety distance and increasing a current ego vehicle acceleration.

Exemplarily, if the speed of the directly-behind vehicle is much faster than the ego vehicle, an estimated travel distance L1 of the ego vehicle within the future second time period is calculated based on the real-time acceleration and real-time speed of the ego vehicle in the previous cycle, and meantime, an actual relative distance L2 between the ego vehicle and the directly-behind vehicle is calculated. A minimum safety keeping distance L3 that needs to be maintained between the directly-behind vehicle and the ego vehicle is calculated using a preset minimum safety distance determination method. It can be seen that L1+L2-L3 is a maximum distance that the directly-behind vehicle can travel within the future second time period. Based on the speed of the directly-behind vehicle and the minimum safety keeping distance, an acceleration difference that at least needs to be reduced when the directly-behind vehicle brakes is calculated. When the reduced acceleration difference is less than a preset acceleration threshold, it is determined that the vehicle satisfies the lane change retreat condition, that is, the ego vehicle lane change is safe, no retreat is needed, and the fast rear vehicle can yield to the ego vehicle; otherwise, the vehicle is controlled to abandon the lane change and return to travel in the original lane.

In yet another possible implementation, the above vehicle lane change control method may further include: when the lane change creation mode is an overtaking lane change, a navigation lane change, or a lane change for avoiding a large vehicle, the vehicle performs the lane change using a preset cruise acceleration.

In yet another possible implementation, the above vehicle lane change control method may further include: when a speed difference between the vehicle and the directly-behind vehicle is greater than or equal to a preset speed difference threshold, or when the lane change creation mode is a ramp-exit lane change, the vehicle performs the lane change using a preset gentle acceleration.

By means of the above technical means, when the vehicle satisfies the lane change retreat condition, it retreats to the original lane in time, the lane change trajectory of the current vehicle is re-planned, and a lane change decision is re-made on the premise that a safety distance is maintained between the current vehicle and the front and rear vehicles, ensuring that the action of the current vehicle is both safe and effective, and the lane change operation can be successfully completed without interfering with other vehicles.

In some embodiments, the above vehicle lane change control method may further include the following steps:
in a case where a third distance between the vehicle and a rear-side target vehicle in the original lane is less than a third safety distance, or there exists a lane-changing vehicle that intends to change to the original lane, controlling the vehicle to travel in the target lane, and outputting prompt information, the prompt information being configured to prompt a driver that a collision risk exists.

Exemplarily, the third safety distance may be 2.5m.

In a possible implementation, the above vehicle lane change control method may further include: identifying whether there is a lane-changing vehicle that intends to change to the original lane within a preset target range. Optionally, identifying whether there is a lane-changing vehicle that intends to change to the original lane within the preset target range may include: identifying other vehicle crossing a lane line of the original lane within the target range; when a proportion of the other vehicle crossing the lane line is greater than a lane change threshold, determining that the other vehicle is a lane-changing vehicle that intends to change to the original lane. Crossing the lane line may mean that a certain part of the vehicle, such as a tire, a vehicle body, etc., has crossed a lane boundary line of the original lane. The lane change threshold may be a preset value, such as 50% of a vehicle body width, etc., which is used to judge whether the vehicle is actually performing a lane change behavior. For example, it may be identified by a vehicle-mounted visual sensor whether there is a lane-changing vehicle that intends to change to the original lane.

By means of the above technical means, by using the third distance between the vehicle and the rear-side target vehicle in the original lane, as well as the relative position relationship of other surrounding vehicles, it is determined whether there is another vehicle performing or preparing to perform a lane change operation, so as to adjust its own driving strategy to ensure safety and output prompt information, which can improve the safety of vehicle driving and reduce the occurrence of accidents.

FIG. 6 is a block diagram of a vehicle lane change control apparatus provided by an embodiment of the present application. As shown in FIG. 6, the device 30 includes:
an acquisition module 31, configured to acquire a first driving parameter, a second driving parameter, and road information of a vehicle, the second driving parameter including a plurality of driving parameters of each of a plurality of surrounding vehicles;
a determination module 32, configured to determine a planned lane change trajectory of the vehicle, an expected acceleration duration of ego vehicle, and an expected acceleration of ego vehicle based on the first driving parameter, the second driving parameter, and the road information;
a calculation module 33, configured to optimize the planned lane change trajectory and the expected acceleration of ego vehicle by a nonlinear programming method to obtain a target lane change trajectory and a target acceleration, the target lane change trajectory-time function and a target acceleration-time function being smooth curves;
a control module 34, configured to control the vehicle to start accelerating within the expected acceleration duration of ego vehicle according to the target acceleration, so that the vehicle travels from an original lane to a target lane according to the target lane change trajectory.

Optionally, the determination module 32 is specifically configured to:
input the first driving parameter and the second driving parameter into a trajectory prediction model to obtain a motion state of ego vehicle and motion states of a plurality of surrounding vehicles within a future first time period, the motion states of the plurality of surrounding vehicles including a motion state of each of the plurality of surrounding vehicles;
determine the planned lane change trajectory according to the motion state of ego vehicle, the motion states of the plurality of surrounding vehicles, and the road information;
determine the expected acceleration duration of ego vehicle according to the planned lane change trajectory, the first driving parameter, and the second driving parameter;
determine the expected acceleration of ego vehicle according to the planned lane change trajectory, the first driving parameter, and the expected acceleration duration of ego vehicle.

Optionally, the determination module 32 is specifically configured to:
determine, according to the road information, a plurality of lane change spaces in an adjacent lane of the original lane, the lane change spaces being gaps available for lane changing in the adjacent lane;
determine a target lane change space from the plurality of lane change spaces based on the motion state of ego vehicle and the motion states of the plurality of surrounding vehicles;
determine the planned lane change trajectory based on the motion state of ego vehicle and the target lane change space.

Optionally, the second driving parameter includes a driving parameter of a directly-ahead vehicle, a driving parameter of a front-side vehicle, and a driving parameter of a rear-side vehicle; and the determination module 32 is specifically configured to:
determine a limit lane change duration based on the planned lane change trajectory, the first driving parameter, and the driving parameter of the directly-ahead vehicle, the limit lane change duration being a maximum time period during which the vehicle can be accelerated;
input the motion state of ego vehicle and the driving parameter of the front-side vehicle into a lane change game model to obtain a first lane change duration;
input the motion state of ego vehicle and the driving parameter of the rear-side vehicle into the lane change game model to obtain a second lane change duration;
in a case where the first lane change duration is less than or equal to the limit lane change duration, and the second lane change duration is less than or equal to the limit lane change duration, take a larger lane change duration of the first lane change duration and the second lane change duration as the expected acceleration duration of ego vehicle.

Optionally, the calculation module 33 is specifically configured to:
project driving trajectories of a plurality of surrounding vehicles onto a displacement-time graph to obtain a position constraint, where the driving trajectories of the plurality of surrounding vehicles include a driving trajectory of each of the plurality of surrounding vehicles, and the driving trajectories of the plurality of surrounding vehicles are obtained by inputting the second driving parameter into a trajectory prediction model;
determine a speed constraint condition based on a preset vehicle speed range;
optimize the planned lane change trajectory using a target cost function, the position constraint and the speed constraint condition to obtain the target lane change trajectory and the target acceleration.

Optionally, the calculation module 33 is further configured to:
project a driving trajectory of a directly-ahead vehicle within a first time period and a driving trajectory of a front-side vehicle within an expected acceleration duration of ego vehicle onto the displacement-time graph to obtain an upper boundary of the position constraint;
project a driving trajectory of a rear-side vehicle within the expected acceleration duration of ego vehicle onto the displacement-time graph to obtain a lower boundary of the position constraint.

Optionally, the acquisition module 31 is further configured to, when the vehicle starts accelerating, acquire a lane change start duration, a current first driving parameter, and a current second driving parameter of the vehicle;
the determination module 32 is further configured to input the current first driving parameter and the current second driving parameter into a trajectory prediction model to obtain a first distance between the vehicle and a directly-ahead vehicle and a second distance between the vehicle and a directly-behind target vehicle within a future second time period, the future second time period being a difference between the expected acceleration duration of ego vehicle and the lane change start duration;
the control module 34 is further configured to, when the vehicle satisfies a lane change retreat condition, control the vehicle to abandon lane changing and return to travel in the original lane, the lane change retreat condition including: the first distance is less than a first safety distance, or the second distance is less than a second safety distance.

Optionally, the control module 34 is specifically configured to:
when a third distance between the vehicle and a rear-side target vehicle in the original lane is less than a third safety distance, or there exists a lane-changing vehicle that intends to change to the original lane, control the vehicle to travel in the target lane, and output prompt information, the prompt information being used to prompt a driver that a collision risk exists.

The vehicle lane change control apparatus in the embodiments of the present application may be a device, or may be a component, an integrated circuit, or a chip in a terminal. The apparatus may be a mobile electronic device or a non-mobile electronic device. Exemplarily, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a personal digital assistant (personal digital assistant, PDA), etc. The non-mobile electronic device may be a server, a network attached storage (Network Attached Storage, NAS), a personal computer (personal computer, PC), a television (television, TV), a teller machine, or a self-service machine, etc., which is not specifically limited in the embodiments of the present application.

The vehicle lane change control apparatus in the embodiments of the present application may be an apparatus having an operating system. The operating system may be an Android (Android) operating system, an ios operating system, or other possible operating systems, which is not specifically limited in the embodiments of the present application.

The vehicle lane change control apparatus provided in the embodiments of the present application can implement various processes implemented by the vehicle lane change control apparatus in the method embodiment of FIG. 1, which are not repeated here.

An embodiment of the present application further provides a vehicle, including the vehicle lane change control apparatus as described above.

The specific implementation process of the vehicle lane change control apparatus in the vehicle provided by the embodiment of the present application is similar to that of the aforementioned vehicle lane change control apparatus, which are not repeated here again.

In the embodiments of the present application, by acquiring the first driving parameter, the second driving parameter, and the road information of the vehicle, the second driving parameter including a plurality of driving parameters for each of a plurality of surrounding vehicles, then determining the planned lane change trajectory of the vehicle, the expected acceleration duration of ego vehicle, and the expected acceleration of ego vehicle based on the first driving parameter, the second driving parameter, and the road information, then optimizing the planned lane change trajectory and the expected acceleration of ego vehicle by the nonlinear programming method to obtain the target lane change trajectory and the target acceleration, and finally controlling the vehicle to start accelerating according to the target acceleration within the expected acceleration duration of ego vehicle, such that the vehicle travels from the original lane to the target lane according to the target lane change trajectory, on the one hand, a high probability of successful lane change can be achieved to ensure driving safety, and on the other hand, the lane change trajectory and acceleration can be appropriately adjusted. Since the lane change trajectory-time function and the acceleration-time function are both smooth curves, that is, the target lane change trajectory and the target acceleration have a gentler slope, smooth transition, no sharp points, and no abrupt change points, the acceleration of the vehicle can be made smoother, avoiding sudden acceleration or sudden deceleration of the vehicle, thereby improving passenger comfort.

Optionally, an embodiment of the present application further provides an electronic device, including a processor, a memory, and a program or instructions stored in the memory and executable on the processor. The program or instructions, when executed by the processor, implement various processes of the embodiments of the vehicle lane change control method as described above, and the same technical effect can be achieved. Details are not repeated here to avoid repetition.

It should be noted that the electronic device in the embodiments of the present application includes the above-mentioned mobile electronic device and non-mobile electronic device.

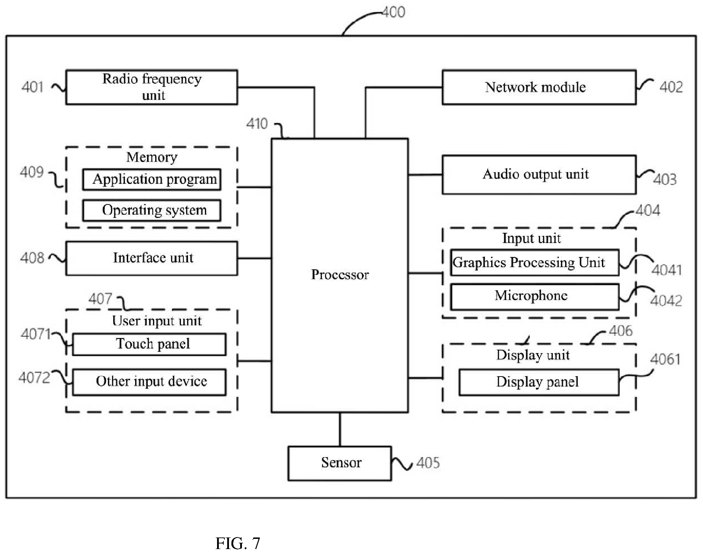

FIG. 7 is a schematic diagram of a hardware structure of an electronic device implementing an embodiment of the present application.

The electronic device 400 includes but is not limited to: a radio frequency unit 401, a network module 402, an audio output unit 403, an input unit 404, a sensor 405, a display unit 406, a user input unit 407, an interface unit 408, a memory 409, a processor 410, and other components.

Those skilled in the art can understand that the electronic device 400 may also include a power supply (such as a battery) for supplying power to various components, and the power supply may be logically connected to the processor 410 through a power management system, thereby implementing functions such as managing charging, discharging, and power consumption through the power management system. The electronic device structure shown in FIG. 7 does not constitute a limitation on the electronic device. The electronic device may include more or fewer components than shown in the figure, or combine some components, or different component arrangement, which will not be described in detail here.

The processor 410 is configured to acquire a first driving parameter, a second driving parameter, and road information of a vehicle, the second driving parameter including a plurality of driving parameters of each vehicle of a plurality of surrounding vehicles;
determine a planned lane change trajectory of the vehicle, an expected acceleration duration of ego vehicle, and an expected acceleration of ego vehicle according to the first driving parameter, the second driving parameter, and the road information;
optimize the planned lane change trajectory and the expected acceleration of ego vehicle by a nonlinear quadratic programming method to obtain a target lane change trajectory and a target acceleration, the target lane change trajectory-time function and a target acceleration-time function being smooth curves;
control the vehicle to start accelerating according to the target acceleration within the expected acceleration duration of ego vehicle, so that the vehicle travels from an original lane to a target lane according to the target lane change trajectory.

It should be understood that, in the embodiments of the present application, the input unit 404 may include a Graphics Processing Unit (Graphics Processing Unit, GPU) 4041 and a microphone 4042. The Graphics Processing Unit 4041 processes the image data of a static picture or video obtained by an image capture device (such as a camera) in a video capture mode or an image capture mode. The display unit 406 may include a display panel 4061, which may be configured in the form of a liquid crystal display, an organic light-emitting diode, or the like. The user input unit 407 includes at least one of a touch panel 4071 and other input device 4072. The touch panel 4071 is also referred to as a touch screen. The touch panel 4071 may include two parts: a touch detection device and a touch controller. The other input device 4072 may include, but is not limited to, a physical keyboard, function keys (such as volume control keys, switch keys, etc.), a trackball, a mouse, and a joystick, which will not be described in detail here.

The memory 409 may be used to store software programs and various data. The memory 409 may mainly include a first storage area for storing programs or instructions and a second storage area for storing data, where the first storage area may store an operating system, an application program or instruction required for at least one function (such as a sound play function, an image play function, etc.), etc. Furthermore, the memory 409 may include a volatile memory or a non-volatile memory, or the memory 409 may include both a volatile memory and a non-volatile memory. Where the non-volatile memory may be a Read-Only Memory (Read-Only Memory, ROM), a Programmable ROM (Programmable ROM, PROM), an Erasable PROM (Erasable PROM, EPROM), an Electrically EPROM (Electrically EPROM, EEPROM), or a flash memory. The volatile memory may be a Random Access Memory (Random Access Memory, RAM), a Static RAM (Static RAM, SRAM), a Dynamic RAM (Dynamic RAM, DRAM), a Synchronous DRAM (Synchronous DRAM, SDRAM), a Double Data Rate SDRAM (Double Data Rate SDRAM, DDRSDRAM), an Enhanced SDRAM (Enhanced SDRAM, ESDRAM), a Synch link DRAM (Synch link DRAM, SLDRAM), and a Direct Rambus RAM (Direct Rambus RAM, DRRAM). The memory 409 in the embodiments of the present application includes but is not limited to these and any other suitable types of memory.

The processor 410 may include one or more processing units; optionally, the processor 410 integrates an application processor and a modem processor, where the application processor mainly processes operations related to an operating system, a user interface, an application program, etc.; and the modem processor mainly processes wireless communication signals, such as a baseband processor. It can be understood that the above-mentioned modem processor may not be integrated into the processor 410.

An embodiment of the present application further provides a readable storage medium, on which a program or an instruction is stored. When the program or instruction is executed by a processor, the various processes of the embodiments of the above vehicle lane change control method are implemented, and the same technical effect can be achieved. Details are not repeated here to avoid repetition.

Where, the processor is the one in the electronic device described in the above embodiments. The readable storage medium includes a computer-readable storage medium, such as a computer Read-Only Memory (Read-Only Memory, ROM), a Random Access Memory (Random Access Memory, RAM), a magnetic disk, or an optical disk.

An embodiment of the present application further provides a chip, the chip including a processor and a communication interface, the communication interface being coupled to the processor, and the processor being configured to run a program or an instruction to implement the various processes of the embodiments of the above vehicle lane change control method, and the same technical effect can be achieved. Details are not repeated here to avoid repetition.

It should be understood that the chip mentioned in the embodiments of the present application may also be referred to as a system on a chip, a system chip, a chip system, or a system-on-chip, etc.

It should be noted that, in the context, the terms "comprise", "include" or any other variation thereof are intended to cover a non-exclusive inclusion, such that a process, method, article, or apparatus that includes a series of elements includes not only those elements but also other elements not clearly listed, or also includes elements inherent to such process, method, article, or apparatus. Without further limitation, an element defined by the phrase "including a ..." does not exclude the presence of another identical element in the process, method, article, or apparatus that includes this element. Furthermore, it should be pointed out that the scope of the methods and apparatus in the embodiments of the present application is not limited to performing functions in the order shown or discussed, but may also include performing functions in a substantially simultaneous manner or in a reverse order according to the functions involved. For example, the described methods may be performed in an order different from that described, and various steps may be added, omitted, or combined. In addition, features described with reference to certain examples may be combined in other examples.

Through the description of the above embodiments, those skilled in the art can clearly understand that the methods of the above embodiments can be implemented by means of software plus a necessary general hardware platform, and of course also by hardware, but in many cases the former is a better implementation. Based on such an understanding, the technical solution of the present application essentially or the part thereof that contributes to the prior art can be embodied in the form of a software product, and such computer software product is stored in a storage medium (such as ROM/RAM, magnetic disk, optical disk) and includes several instructions for causing a terminal (which may be a mobile phone, a computer, a server, an air conditioner, or a network device, etc.) to execute the methods described in the various embodiments of the present application.

The above embodiments are only preferred embodiments for fully illustrating the present application, and the protection scope of the present application is not limited thereto. Equivalent substitutions or modifications made by those skilled in the art on the basis of the present application are within the protection scope of the present application.

## Claims

1. A vehicle lane change control method, comprising:
acquiring a first driving parameter, a second driving parameter and road information of a vehicle, wherein the second driving parameter comprises a plurality of driving parameters of each of a plurality of surrounding vehicles;
determining a planned lane change trajectory, an expected acceleration duration of ego vehicle and an expected acceleration of ego vehicle based on the first driving parameter, the second driving parameter and the road information;
optimizing the planned lane change trajectory and the expected acceleration of ego vehicle by a nonlinear programming method to obtain a target lane change trajectory and a target acceleration, wherein the target lane change trajectory and a target acceleration-time function are smooth curves;
controlling the vehicle to start accelerating within the expected acceleration duration of ego vehicle according to the target acceleration, so that the vehicle travels from an original lane to a target lane according to the target lane change trajectory.

2. The method according to claim 1, wherein the determining a planned lane change trajectory of the vehicle, an expected acceleration duration of ego vehicle and an expected acceleration of ego vehicle based on the first driving parameter, the second driving parameter and the road information comprises:
inputting the first driving parameter and the second driving parameter into a trajectory prediction model to obtain a motion state of ego vehicle and motion states of a plurality of surrounding vehicles within a future first time period, wherein the motion states of the plurality of surrounding vehicles comprise a motion state of each of the plurality of surrounding vehicles;
determining the planned lane change trajectory based on the motion state of ego vehicle, the motion states of the plurality of surrounding vehicles and the road information;
determining the expected acceleration duration of ego vehicle based on the planned lane change trajectory, the first driving parameter and the second driving parameter;
determining the expected acceleration of ego vehicle based on the planned lane change trajectory, the first driving parameter and the expected acceleration duration of ego vehicle.

3. The method according to claim 2, wherein the determining the planned lane change trajectory based on the motion state of ego vehicle, the motion states of the plurality of surrounding vehicles and the road information comprises:
determining a plurality of lane change spaces in an adjacent lane of the original lane based on the road information, wherein the lane change spaces are gaps available for lane changing in the adjacent lane;
determining a target lane change space from the plurality of lane change spaces based on the motion state of ego vehicle and the motion states of the plurality of surrounding vehicles;
determining the planned lane change trajectory based on the motion state of ego vehicle and the target lane change space.

4. The method according to claim 2 or 3, wherein the second driving parameter comprises a driving parameter of directly-ahead vehicle, a driving parameter of front-side vehicle, and a driving parameter of rear-side vehicle, and the determining the expected acceleration duration of ego vehicle based on the planned lane change trajectory, the first driving parameter and the second driving parameter comprises:
determining a limit lane change duration based on the planned lane change trajectory, the first driving parameter and the driving parameter of directly-ahead vehicle, wherein the limit lane change duration is a maximum time period for which the vehicle is capable of be accelerated;
inputting the motion state of ego vehicle and the driving parameter of front-side vehicle into a lane change game model to obtain a first lane change duration;
inputting the motion state of ego vehicle and the driving parameter of rear-side vehicle into a lane change game model to obtain a second lane change duration;
in a case where the first lane change duration is less than or equal to the limit lane change duration and the second lane change duration is less than or equal to the limit lane change duration, taking a larger lane change duration of the first lane change duration and the second lane change duration as the expected acceleration duration of ego vehicle.

5. The method according to claim 1, wherein the optimizing the planned lane change trajectory and the expected acceleration of ego vehicle by a nonlinear programming method to obtain a target lane change trajectory and a target acceleration comprises:
projecting driving trajectories of the plurality of surrounding vehicles onto a displacement-time diagram to obtain a position constraint, wherein the driving trajectories of the plurality of surrounding vehicles comprise a driving trajectory of each of the plurality of surrounding vehicles, and the driving trajectories of the plurality of surrounding vehicles are obtained by inputting the second driving parameter into a trajectory prediction model;
determining a speed constraint condition based on a preset vehicle speed range;
optimizing the planned lane change trajectory using a target cost function, the position constraint and the speed constraint condition to obtain the target lane change trajectory and the target acceleration.

6. The method according to claim 5, wherein the projecting driving trajectories of the plurality of surrounding vehicles onto a displacement-time diagram to obtain a position constraint comprises:
projecting a driving trajectory of directly-ahead vehicle within a first time period and a driving trajectory of front-side vehicle within the expected acceleration duration of ego vehicle onto the displacement-time diagram to obtain an upper boundary of the position constraint;
projecting a driving trajectory of rear-side vehicle within the expected acceleration duration of ego vehicle onto the displacement-time diagram to obtain a lower boundary of the position constraint.

7. The method according to any one of claims 1 to 6, wherein the method further comprises:
in a case where the vehicle starts accelerating, acquiring a lane change start duration, a current first driving parameter and a current second driving parameter of the vehicle;
inputting the current first driving parameter and the current second driving parameter into a trajectory prediction model to obtain a first distance between the vehicle and a directly-ahead vehicle and a second distance between the vehicle and a directly-behind target vehicle within a future second time period, wherein the future second time period is a difference between the expected acceleration duration of ego vehicle and the lane change start duration;
in a case where the vehicle satisfies a lane change retreat condition, controlling the vehicle to abandon lane changing and return to travel in the original lane, wherein the lane change retreat condition comprises: the first distance being less than a first safety distance, or the second distance being less than a second safety distance.

8. The method according to any one of claims 1 to 7, wherein the method further comprises:
in a case where a third distance between the vehicle and a target rear-side vehicle in the original lane is less than a third safety distance, or there exists a lane-changing vehicle that intends to change to the original lane, controlling the vehicle to travel in the target lane and outputting prompt information, wherein the prompt information is configured to prompt a driver that a collision risk exists.

9. A vehicle lane change control apparatus, comprising:
an acquisition module, configured to acquire a first driving parameter, a second driving parameter and road information of a vehicle, wherein the second driving parameter comprises a plurality of driving parameters of each of a plurality of surrounding vehicles;
a determination module, configured to determine a planned lane change trajectory of the vehicle, an expected acceleration duration of ego vehicle and an expected acceleration of ego vehicle based on the first driving parameter, the second driving parameter and the road information;
a calculation module, configured to optimize the planned lane change trajectory and the expected acceleration of ego vehicle by a nonlinear programming method to obtain a target lane change trajectory and a target acceleration, wherein the target lane change trajectory and a target acceleration-time function are smooth curves;
a control module, configured to control the vehicle to start accelerating within the expected acceleration duration of ego vehicle according to the target acceleration, so that the vehicle travels from an original lane to a target lane according to the target lane change trajectory.

10. An electronic device, comprising a processor, a memory, and a program or instructions stored in the memory and executable on the processor, the program or instructions, when executed by the processor, implementing steps of the vehicle lane change method according to any one of claims 1 to 8.

11. A readable storage medium, wherein the readable storage medium stores a program or instructions, the program or instructions, when executed by a processor, implementing steps of the vehicle lane change control method according to any one of claims 1 to 8.

12. A vehicle, comprising the vehicle lane change control apparatus according to claim 9.
